# EUROPEAN PATENT APPLICATION

(11) **EP 4 215 597 A1**
(43) Date of publication of application: **26.07.2023**
(21) Application number: 22152942.3
(22) Date of filing: 24.01.2022
(51) Int. Cl.: C10C 3/00, C10C 3/06, C04B 35/52, C25C 3/12, H01M 4/133, H05B 7/085

(54) **IMPROVED THERMOPLASTIC CARBON PRECURSOR MATERIAL FOR APPLICATION IN COATING, BINDING, AND IMPREGNATION PROCESSES FOR THE MANUFACTURING OF ELECTRODES FOR STEEL AND ALUMINIUM PRODUCTION AND BATTERIES**

(71) Applicant: Rain Carbon bv, 9060 Zelzate (BE); Rain Carbon Germany GmbH, 44579 Castrop-Rauxel (DE)
(72) Inventor: Spahr, Michael, 9060 Zelzate (BE); Kuhnt, Christopher, 44579 Castrop-Rauxel (DE); Claes, Joris, 9060 Zelzate (BE); Denoo, Bram, 9060 Zelzate (BE)
(74) Representative: BiiP cvba

(57) **Abstract**

The present invention is directed to a carbon precursor material characterized by a flashpoint above 290°C and a softening point between 110 and 300°C Mettler and comprising petroleum-derived pitch product derived from a petroleum-based raw material having a concentration of less than 40% by weight of asphaltenes as measured by SARA analysis. Further, the present invention is directed to the use of such carbon precursor material in binding/coating/impregnation processes in the production of graphite electrodes for electric arc furnaces used in steel/ferro-alloy/silicon production or in carbon electrodes for aluminum production and/or manufacture of graphite particles for the manufacturing of battery electrodes. The present invention is further directed to a carbon or graphite electrode comprising said pitch binder in converted state, and in particular a battery electrode. The present invention provides also a process for producing a coating and/or binding and/or impregnation carbon precursor material comprising a petroleum-derived pitch product, the process comprising the steps of providing petroleum-based raw material having a concentration of less than 40% by weight of asphaltenes measured by SARA analysis, thermally treating said petroleum-based raw material above 300°C at atmospheric pressure, and subsequently distill the thermally treated material, thereby obtaining a distillation residue being said petroleum-derived pitch product.

## Description

### TECHNICAL FIELD

The present invention generally relates to a carbon precursor material.

In addition, the present invention relates to a process for producing such carbon precursor material.

More specifically, the present invention generally relates to the use of such carbon precursor material in binding and or impregnation processes for the manufacture of graphitized electrodes for electric arc furnaces, (semi-)graphitized carbon anodes/cathodes and Söderberg paste for aluminum production, or to the use as coating material for carbon-coated particles or for the agglomeration of fine particle grains to larger electrically conductive aggregates or carbon-containing particle composites, or to the use for the creation of carbon matrices used to create battery electrode material powders.

In addition, the present invention relates to electrodes, more specifically battery electrodes, comprising electrode material with a particle coating made of such carbon precursor material or a composite of particle grains embedded in a carbon matrix made with such a carbon precursor material to form a particle composite used as battery electrode material.

### BACKGROUND

Traditionally, the hydrocarbon pitch material in coating, binding or impregnation processes for the manufacturing of graphite electrodes for electric arc furnaces, carbon anodes/cathodes and Söderberg paste for aluminum production, and battery electrodes, in particular Li-Ion batteries, is coal tar pitch. Also, the hydrocarbon impregnation pitch used for the impregnation of graphite electrodes after the first carbonization of the electrode is typically based on coal tar distillation products.

As by-product of the production of metallurgical coke used in the steel production, coal tar has always been sufficiently available. Recently however, due to the lower demand for virgin iron, less metallurgical coke is produced and hence less coal tar is available. Higher iron or steel scrap recycling using electric arc furnaces is contributing to this trend. In addition, steel production is moving away from high CO₂ emitting manufacturing processes like blast furnaces using metallurgical coal as reduction medium towards direct reduction of iron ore with hydrogen being another reason for the expected decline of the coal tar availability.

Another drawback of coal tar pitch binder is the rather high amount of (ca. 10 000 ppm in the typical viscosity range) of benzo(a)pyrene (B[a]P) which is classified as carcinogenic. On top of the B[a]P content also some other polyaromatic constituents are considered relevant as hazardous to health and environment. In general, the 16 EPA-PAH can be used to calculate a toxicity indicator value for these materials.

In an attempt to produce an alternative pitch that contains less benzo[a]pyrene than coal tar pitch and is ensuring future security of supply, petroleum-derived pitch has been considered.

However, conventional petroleum-derived pitch does not attain the same quality parameters of the manufactured carbon artefacts as coal tar pitch if used pure in the electrode production process. A first drawback is that it has a lower coke yield than coal tar pitch.

In addition, existing industrial petroleum-based pitches can have flashpoints starting from 200°C (which is well below the typical flashpoints of coal tar pitch) and thus give rise to potential safety concerns in the electrode fabrication process that can contain hot mixing processes at temperatures up to 200°C. This as well limits the extent to which petroleum pitches can be blend with coal tar pitch.

Another drawback of existing industrial petroleum-based pitches is that these pitch types develop significantly more volatiles upon heating to 400°C than coal tar pitch, potentially interfering with the carbonization process applied in the manufacture of carbon anodes or cathodes.

In summary, none of the prior art attempts have provided an alternative carbon precursor material to coal tar pitch that can be used in substantial volumes/blend ratios to reliably serve the aluminum and steel industry with high product volumes.

Therefore, it is a general objective of the present invention to provide an alternative carbon precursor that allows an increased security of supply and meets the necessary requirements for use as in binding, coating and impregnation processes, and as a precursor for conductive carbon in the manufacturing of (semi)graphitized carbon electrodes and battery electrodes as well.

Another objective of the present invention is to provide an alternative carbon precursor for binding, coating and impregnation processes resulting in similar coke values, and similar processing and performance of graphite electrodes, pre-baked anodes and Söderberg pastes aluminum production, carbon anodes, and battery electrodes.

A further objective of the present invention is to provide an alternative carbon precursor for binding, coating and impregnation processes that has a lower B[a]P and 16 EPA-PAH sum content.

### SUMMARY

In a first aspect in accordance with the present invention, a carbon precursor material is provided characterized by a flashpoint above 290°C and a softening point between 110 and 300°C Mettler and comprising petroleum-derived pitch product derived from a petroleum-based raw material having a concentration of less than 40% by weight of asphaltenes measured by SARA analysis.

In a second aspect of the present invention, the use of such carbon precursor material is provided as a binder and/or impregnation material in the production of graphite electrodes for electric arc furnaces used in steel production or in (semi-)graphitized electrodes for aluminum production and/or as coating and/or binding material for graphite particles for the manufacturing of battery electrodes.

In a third aspect in accordance with the present invention, a carbon or graphite electrode is provided comprising said pitch binder in converted state, and in particular a battery electrode.

In a fourth aspect in accordance with the present invention, a process for producing a coating and/or binding and/or impregnation carbon precursor material comprising a petroleum-derived pitch product is provided, the process comprising the steps of:
- providing a petroleum-based raw material having a concentration of less than 40% weight asphaltenes by SARA analysis
- thermally treating said petroleum-based raw material above 300°C at atmospheric pressure
- subsequently distill the thermally treated material, thereby obtaining a distillation residue being said petroleum-derived pitch product

### DETAILED DESCRIPTION

In a first aspect in accordance with the present invention, a carbon precursor material is provided characterized by a flashpoint above 290°C and a softening point between 90 and 300°C Mettler and comprising pitch product derived from a petroleum-based raw material having a concentration of less than 40% by weight of asphaltenes measured by SARA analysis (Clay-Gel Absorption Chromatographic Method according to ASTM D2007).

Said petroleum-based raw material having less than 40% by weight of asphaltenes may further be characterized by having a concentration of saturates > 10% by weight and/or a concentration of resins > 35% by weight measured by SARA analysis.

In particular embodiments, said petroleum-based raw material may have less than 35, less than 30, or even less than 25%% (by weight) asphaltenes measured by SARA analysis. Further, the amounts of asphaltenes as mentioned above may include loss as defined in ASTM D2007.

The carbon precursor material according to the present invention may combine the more advantageous properties of the conventional coal tar-based pitches with the more advantageous properties of petroleum-based pitches, namely
- a coking value at the level of coal tar pitch, at equivalent softening point, hence higher than existing petroleum pitches, and/or
- a viscosity at the level of coal tar pitch, at equivalent softening point, hence lower than existing petroleum pitches, and/or
- a flashpoint superior to both coal tar pitch and petroleum pitch, at any equivalent softening point, and/or
- a benzo[a]pyrene content lower than both coal tar pitch and conventional petroleum pitch at any equivalent softening point and/or
- a very low development of volatiles below 400°C, better than conventional coal tar and petroleum pitches at equivalent softening point.

The carbon precursor material of the present invention may show high carbon yield combined with high flashpoint and low viscosity in the molten state combined with low B[a]P content. Further, it may show low quinoline insoluble content and toluene insoluble content being ideal for particle coating processes, and good milling properties for dry particle coating processes. It may also demonstrate high flashpoints and low viscosity for safe and efficient mixing with powders in binding and coating processes while being environmentally friendly due to low B[a]P concentrations and/or an improved toxicity indicator.

The high flashpoints and low viscosities in the molten state may make the carbon precursor material also suitable for direct coating in liquid state. In this case the freshly produced carbon precursor material may be sprayed directly in the particles to be coated being fluidized by an intensive mixer or fluidized bed. The freshly produced liquid carbon precursor may also be directly used for particle binding and aggregation. In this case the hot liquid precursor is directly sprayed onto the particles to be aggregated being treated by high shear forces in a heated mixer.

In addition, where neither pure petroleum-derived pitch, nor blends of petroleum pitch with coal tar pitch with substantial amount of petroleum pitch above 25 % have so far been able to meet the requirements for manufacturing graphite electrodes due to low coking value and high viscosity, the carbon precursor material in accordance with the present invention may allow meeting the requirements of this application while having lower B[a]P content.

Further, where neither pure petroleum-derived pitch, nor blends of petroleum pitch with coal tar pitch with substantial amount of petroleum pitch above 25 % have so far not been able to meet the requirements for manufacturing semi-graphitized carbon anodes and graphitized carbon cathodes and Söderberg paste for the aluminum industry due low coking value, low flashpoint and high development of volatiles below 400°C, a carbon precursor material in accordance with the present invention may allow meeting the requirements of this application with lower B[a]P content.

Another advantage of a carbon precursor material according to the present invention is that, where conventional petroleum-derived pitch has drawbacks for the manufacture of battery electrodes with respect to coking value, viscosity and benzo[a]pyrene content, this carbon precursor material may provide substantial advantages with respect to these parameters.

In addition, a carbon precursor material according to the present invention may be applied in significantly higher blend ratios with coal tar pitch than conventional petroleum-derived pitches, thereby meeting the objective to have an increased security of supply of a high-quality carbon precursor to the downstream users.

In an embodiment of the present invention, the carbon precursor material may have a softening point between 90 and 300°C Mettler, preferably between 110°C and 250°C, and more preferably between 120°C and 220°C Mettler. In the light of particle coating applications, a softening point above 120°C may allow the carbon precursor to be milled to fine particles used in a dry particle coating process.

Further, the carbon precursor material may have a coke value of at least 50% ALCAN, or at least 55% ALCAN, and preferably above 60% ALCAN, resulting in a lower porosity of the carbon artefact after carbonization/graphitization and so leading to better properties in the subsequent use as electrode in aluminum production and battery cells.

In an embodiment of the present invention, the carbon precursor material may have a coke value of at least 50% ALCAN, a B[a]P content lower than 500 mg/kg and a softening point being higher than 110°C Mettler.

In another embodiment, the carbon precursor material may have a coke value of at least 70% ALCAN, a B[a]P content lower than 100 mg/kg and a softening point above 200°C Mettler.

As the carbon precursor material is converted into carbon during the carbonization process being a thermal treatment in an inert gas atmosphere or vacuum, a sufficiently high coke yield allows avoiding a high porosity in the resulting graphite particles due to fewer volatiles formed during the carbonization process. A dense carbon layer may be formed with a morphology that is advantageous for the formation of an efficient solid electrolyte interphase at the electrode particle surface, i.e. the passivation layer formed from electrolyte decomposition products at the electrochemically active electrode surface area being in contact with the electrolyte. In the case of a liquid electrolyte, this passivation layer is formed at the electrochemically active electrode surface area being wetted by the liquid electrolyte. The nature and quality of the carbon film formed at the particle surface positively influences the solid electrolyte interphase and therefore several battery cell parameters like the specific charge losses, the current rate discharge and charge performance, the charge/discharge cycling stability, and safety performance of the battery cell.

In an embodiment of the present invention, the carbon precursor material may have a viscosity lower than 600 mPa.s at 180°C and/or a viscosity lower than 200 mPa.s at 200°C, while having a softening point between 110 and 130°C Mettler.

In another embodiment, the viscosity may be lower than 2000 mPa.s at 300°C while having a softening point of 230°C Mettler.

The above low melt viscosities enhance wetting and impregnation of the particle surface, such that a thin film of carbon being homogeneously distributed at the particle surface is achieved. Enhanced surface wetting and impregnation results in a good coverage of the geometrical particle surface but also of the micro- and mesopores as well as the roughness that typically can be found at the particle surface.

The carbon precursor material of the present invention may comprise 25 to 90% by weight, and preferably 50 to 90% by weight, of said petroleum-derived pitch product, and a coal tar-based pitch.

In an even more preferred embodiment of the present invention, the carbon precursor material may consist of said petroleum-derived pitch product, i.e. containing 100% by weight petroleum-derived pitch product.

The benzo[a]pyrene content may be lower than 500 ppm in case the carbon precursor material containing 100% by weight of petroleum-derived pitch product. It may be lower than 2000 ppm in case of 85% by weight of petroleum-derived pitch product and a coal tar-based pitch, lower than 6000 ppm in case of 50% by weight of petroleum-derived pitch product, or lower than 8500 ppm in case of 25% by weight of petroleum-derived pitch product

In an embodiment of the present invention, the carbon precursor material may have a concentration of at least 80%, or at least 90% by weight of asphaltenes as measured by the SARA method. This may ensure a dense (low porosity) homogeneous carbon coating of the electrode material surface lowering the surface reactivity towards the electrolyte as well the surface area of the electrode material being in direct contact with the battery electrolyte. In addition, the morphology carbon layer formed at the particle surface in a subsequent carbonization of the carbon precursor ensures a good electrical conductivity and particle contact of the electrode material in the battery cell electrode.

In an aspect of the present invention, the carbon precursor material may be used in binding/impregnating/coating processes in the production of graphite electrodes for electric arc furnaces or in semi-graphitized carbon anodes and graphitized carbon cathodes and Söderberg paste for the aluminum industry and/or for particles of electrode material for the manufacturing of battery electrodes. Particles to be coated may be of graphite, silicon, silicon oxide, or carbonaceous composites thereof with a carbon surface layer, thereby obtaining carbonaceous powdered materials or powder composites. Particles of the same nature also may be agglomerated using the same carbon precursor material.

In accordance with the present invention, a process for producing a coating and/or binding and/or impregnation carbon precursor material comprising a petroleum-derived pitch product is provided, the process comprising the steps of:
- providing petroleum-based raw material having a concentration of less than 40% weight asphaltenes by SARA analysis
- thermally treating said petroleum petroleum-based raw material above 300°C at atmospheric pressure
- subsequently distill the thermally treated material, thereby obtaining a distillation residue being said petroleum-derived pitch product.

Inventors found that the typically low pitch yield of said petroleum-based raw material may be significantly improved by a thermal treatment above 300°C, and preferably up to 400°C, at atmospheric pressure. This treatment may be performed optionally in the presence of catalysts or reactivity inducing agents like organic peroxides, superacid, strong Lewis acids, oxygen or selected petroleum streams being suitable for promoting the polymerization of the aromatic constituents and the formation of condensed aromatic polycyclic hydrocarbons.

The distillation of the thermally treated raw material may comprise vacuum distillation, e.g. with a vacuum distillation column for obtaining a distillation residue being said petroleum-derived pitch product. Such subsequent distillation may be performed aiming to remove volatile constituents and may result in a petroleum-derived pitch product and hence a carbon precursor material with a broad range of softening points at a reasonable pitch yield of more than 30%.

In a preferred embodiment of the process, said petroleum-based raw material is thermally treated at 380°C for up to 8 h and subsequently distilled under vacuum to the extent that the obtained petroleum-derived pitch product shows the targeted softening point at an economic pitch yield.

In a process of the present invention, said petroleum-based raw material having less than 40% by weight of asphaltenes may further be characterized by having a concentration of saturates > 10% by weight and/or a concentration of resins > 35% by weight as measured by SARA analysis.

In a particular embodiment of a process of the present invention, said petroleum-based raw material may have less than 35, less than 30, or even less than 25% by weight of asphaltenes as measured by SARA analysis.

Further, such process may comprise mixing said petroleum-derived pitch product with coal tar-based pitch obtaining a carbon precursor material with an amount of 25 to 90% by weight of said petroleum-derived pitch product in the mix.

The manufacture process of the carbon precursor may be part of a process for manufacturing a graphite or carbon electrode.

Below tables illustrate examples of carbon precursor material formulations in accordance with an embodiment of the present invention, namely table 1 provides examples 1-5 of the carbon precursor material containing only the petroleum-derived pitch product, whereas table 2 provides examples 6-8 containing the petroleum-derived pitch product mixed with coal tar-based pitch.

**TABLE 1:**

| Product Parameter | Example 1 | Example 2 | Example 3 | Example 4 | Example 5 |
|---|---|---|---|---|---|
| SP, Mettler in °C (SPM) | 124 | 148 | 209 | 115 | 230 |
| TI in wt.% | 3.8 | 5.5 | 20.4 | 4.8 | 34.0 |
| QI in wt.% | 0.6 | 0.6 | 0.8 | 2.5 | 10.0 |
| Beta-resin in wt. % | 3.2 | 4.9 | 19.6 | 2.3 | 24.0 |
| Coke value, ALCAN in wt.% | 60.5 | 66.8 | 78.1 | 54.6 | 85.0 |
| B[a]P Content in ppm | 41 | 27 | 18 | 94 | 48 |
| 16 EPA-PAH sum in wt.% | 0.1 | 0.03 | 0.09 | 0.07 | 0.03 |
| Flash point (small scale equilibrium) in °C, min. | > 300 | 295 | > 300 | > 300 | > 300 |
| Melt viscosity (visc) in mPa s | | | | | |
| -160 ⁰C | 3624 | | | 1532 | |
| -180 ⁰C | 609 | 4831 | | 427 | |
| -200 ⁰C | 178 | 1192 | | 116 | |
| -220 ⁰C | 85 | 393 | 98170 | 42 | |
| -240 ⁰C | | 171 | 11500 | 20 | |
| -260 ⁰C | | | 2243 | | |
| -280 ⁰C | | | 613 | | |
| -300 ⁰C | | | 248 | | 1838 |
| -320 ⁰C | | | | | 778 |
| -340 ⁰C | | | | | 249 |
| Viscosity recovery after 60 seconds at 160 ⁰C in % | 96 | | | 91 | |
| Melt viscosity index Log₁₀100*(visc)/SPM | | | | | |
| -160 ⁰C | 2.87 | | | | |
| -180 ⁰C | 2.25 | 2.49 | | 2.77 | |
| -200 ⁰C | 1.81 | 2.08 | | 2.29 | |
| -220 ⁰C | 1.56 | 1.75 | 2.39 | 1.80 | |
| -240 ⁰C | 0.92 | 1.51 | 1.94 | 1.41 | |
| -260 ⁰C | | | 1.60 | 1.13 | |
| -280 ⁰C | | | 1.33 | | |
| -300 ⁰C | | | 1.15 | | 1.42 |
| -320 ⁰C | | | | | 1.26 |
| -340 ⁰C | | | | | 1.04 |
| SARA (starting material) in wt.% | | | | | |
| -saturates | 13.8 | 13.8 | 13.8 | 15.4 | |
| -aromatics | 15.2 | 15.2 | 15.2 | 7.2 | |
| -resins | 47.4 | 47.4 | 47.4 | 42.7 | |
| -asphaltenes | 19.9 | 19.9 | 19.9 | 32.6 | |
| SARA (final product) in wt.% | | | | | |
| -saturates | 0.8 | 0.5 | | 1.6 | |
| -aromatics | 0.4 | 0.3 | | 1.2 | |
| -resins | 7.0 | 7.2 | | 19.5 | |
| -asphaltenes | 90.7 | 92.0 | | 76.7 | |

**TABLE 2:**

| Product Parameter | Coal tar pitch 1 | Typical petroleum pitch | Example 6 | Example 7 | Example 8 |
|---|---|---|---|---|---|
| Amount of Example 1 in coal tar pitch 1 | 0 | - | 25 | 50 | 85 |
| SP, Mettler in ⁰C (SPM) | 118 | 116 | 116 | 120 | 125 |
| TI in wt.% | 27.8 | 17.8 | 20.3 | 16.3 | 8.8 |
| QI in wt.% | 7.8 | 1.0 | 3.4 | 2.3 | 2.3 |
| Beta-resin in wt. % | 20 | 16,8 | 16.9 | 14.0 | 6.5 |
| Coke value, ALCAN in wt.% | 58.4 | 46.7 | 60.9 | 60.7 | 60.5 |
| B[a]P Content in ppm | 12176 | 1161 | 8454 | 5650 | 1724 |
| 16 EPA-PAH sum in wt.% | 8.8 | 2.03 | 6.6 | 4.4 | 1.4 |
| Flash point (small scale equilibrium) in °C, min. | 260-280 | 226 | 295 | 300 | 300 |
| Melt viscosity (visc) in mPa s | | | | | |
| -140 ⁰C | 28600 | | | | |
| -150°C | 9200 | 52100 | | | |
| -160 ⁰C | 3500 | | | | |
| -170°C | | 8120 | | | |
| -180 ⁰C | 750 | | | | |
| -190 | | 1770 | | | |
| -200 ⁰C | | | | | |
| -210°C | | 607 | | | |
| -220 ⁰C | | | | | |
| -240 ⁰C | | | | | |
| -260 ⁰C | | | | | |
| -280 ⁰C | | | | | |
| -300 ⁰C | | | | | |
| -320 ⁰C | | | | | |
| -340 ⁰C | | | | | |
| Viscosity recovery after 60 seconds at 160 ⁰C in % | 96 | | 91 | 96 | 94 |
| Melt viscosity index Log₁₀100*(visc)/SPM | | | | | |
| -160 ⁰C | 2.87 | | | | |
| -180 ⁰C | 2.25 | 2.49 | | | |
| -200 ⁰C | 1.81 | 2.08 | | | |
| -220 ⁰C | 1.56 | 1.75 | | | |
| -240 ⁰C | 0.92 | 1.51 | | | |
| -260 ⁰C | | | | | |
| -280 ⁰C | | | | | |
| -300 ⁰C | | | | | |
| -320 ⁰C | | | | | |
| -340 ⁰C | | | | | |
| SARA (starting material) in wt.% | | | | | |
| -saturates | | 1.3 | | | |
| -aromatics | | 12.0 | | | |
| -resins | | 22.2 | | | |
| -asphaltenes | | 63.8 | | | |
| SARA (final product) in wt.% | | | | | |
| -saturates | 0.5 | 1.1 | | | |
| -aromatics | 0.4 | 0.5 | | | |
| -resins | 3.0 | 8.7 | 3.0 | 3.0 | 3.0 |
| -asphaltenes | 83.7 | 89.2 | 93.0 | 93.0 | 93.0 |

Example 9:
Reduction of the BET specific surface area (BET SSA) of a natural graphite, spherically shaped, with an average particle size of 17 mm and a BET SSA of 6.0 m² g⁻¹, using the carbon precursor material of examples 5 and 2:
Natural graphite together with the appropriate amount of a carbon precursor according to the present invention (total mass being equal to 50g) was suspended in tetrahydrofuran (THF, 100mL). The resulting mixture was sonicated at room temperature for 1h after which the tetrahydrofuran was gently evaporated at a sustained vacuum not lower than 300 mbar(a) at a temperature of 40°C. Once a solid cake has formed, another 100 mL of THF was added and the evaporation step repeated until a free-flowing powder is obtained. The resulting material is dried at 80°C for 24h after which the dried mass was heat-treated at 1050°C under inert gas atmosphere for 2 h. The resulting carbonized material is then sieved through a 200 µm sieve.

| Example 5 | | | |
|---|---|---|---|
| Amount [wt.%] | Baking Loss [wt.%] | Carbon Loading [wt.%] | BET SSA [m² g⁻¹] |
| 0 | 0 | 0 | 6 |
| 3 | 0.63 | 2.37 | 4.15 |
| 5 | 0.89 | 4.11 | 3.53 |
| 7 | 1.41 | 5.59 | 2.39 |
| 8 | 1.58 | 6.42 | 2.32 |

| Example 2 | | | |
|---|---|---|---|
| Amount [wt.%] | Baking Loss [wt.%] | Carbon Loading [wt.%] | BET SSA [m² g⁻¹] |
| 0 | 0 | 0 | 6 |
| 3 | 1.01 | 1.99 | 4.36 |
| 5 | 1.73 | 3.27 | 2.74 |
| 7 | 2.35 | 4.65 | 2.12 |
| 8 | 2.67 | 5.33 | 1.83 |

Example 10:
Pilot anode production procedure using CTP vs. the carbon precursor material of examples 6,7 & 8:
Dry aggregate based on a standard calcined petroleum coke was pre-heated to the mixing temperature, transferred to a preheated 10 L intensive mixer and homogenized for one minute. The liquid carbon precursor was pre-heated to a temperature 100°C above the SPM and added after the 1 min of dry mixing. The anode paste was mixed for 10 minutes at 180°C. After mixing, the paste was cooled to 20°C above the SPM, transferred into a preheated pilot anode press and subsequently pressed at 42 MPa for one minute. The green anode was removed, cooled to ambient temperature and the green apparent density calculated. Anode batches were baked to an equivalent temperature of 1210°C using a heating rate of 20°C/h. After baking, the anode weight and physical dimensions were measured to calculate the shrinkage and baking loss. Three 50 mm Ø cores were drilled per anode, cut to the required size and further analyzed according to the respective methods.
Results of

| | | **CTP** | **Example 6** | **Example 7** | **Example 8** |
|---|---|---|---|---|---|
| Binder Level | [%] | 14.5 | 14.1 | 14 | 13.5 |
| Mixing Temperature | [°C] | 180 | 180 | 180 | 180 |
| Green Apparent Density | [kg/dm³] | 1.648 | 1.642 | 1.646 | 1.641 |
| Baking Loss | [%] | 4.9 | 4.9 | 5 | 4.6 |
| Baking Shrinkage | [%] | 2.2 | 2.2 | 1.5 | 2.3 |
| Baked Apparent Density | [kg/dm³] | 1.598 | 1.594 | 1.593 | 1.598 |
| Specific Electrical Resistance | [µΩm] | 55.3 | 53.14 | 53.79 | 56.54 |
| Flexural Strength | [MPa] | 11.34 | 10.94 | 10.86 | 8.74 |
| Compressive Strength | [MPa] | 48.1 | 48.2 | 47.5 | |
| Elasticity Modulus Static | [GPa] | 4.8 | 5.1 | 4.6 | |
| Air Permeability | [nPm] | 0.29 | 0.3 | 0.4 | 0.37 |

Below table provides an overview of analytical procedures of the product parameters as used in this text:

| **Analysis** | **Unit** | **Norm/Method** |
|---|---|---|
| Softening point, Mettler | °C | ASTM D3104 |
| Quinoline insolubles, QI | % (by weight) | DIN 51921 |
| Toluene insolubles, TI | % (by weight) | DIN 51906 |
| Beta-resins | % (by weight) | Calculation TI-QI |
| Coke yield (value), Alcan | % (by weight) | ASTM D4715 |
| | | |
| Benzo[a]pyrene content | ppm | ISO 18287 |
| 16 EPA-PAH sum | % (by weight) | ISO 18287 |
| Flash point (small scale equilibrium) | °C | ISO 3679 |
| Dynamic viscosity at temperatures of 160 °C - 300 °C | mPa.s | ASTM D5018 |
| Viscosity recovery after 60 seconds (180 ⁰C) | % | Internal method according to DIN91143-2 |
| SARA (starting material) | | ASTM D2007 |
| -asphaltenes | % (by weight) | |
| -resins | % (by weight) | |
| -aromatics | % (by weight) | |
| -saturates | % (by weight) | |
| SARA (final pitch product) | | ASTM D2007 |
| -asphaltenes | % (by weight) | |
| -resins | % (by weight) | |
| -aromatics | % (by weight) | |
| -saturates | % (by weight) | |
| Green Apparent Density | kg/dm3 | |
| Baking Loss | % (by weight) | Internal method |
| Baking Shrinkage | % (by volume) | Internal method |
| Baked Apparent Density | | ISO 12985-1 |
| Specific Electrical Resistance | µΩm | ISO11713 |
| Flexural Strength | MPa | ISO 12986-1 |
| Compressive Strength | MPa | ISO 18515 |
| Elasticity Modulus Static | GPa | ISO 18515 |
| Air Permeability | nPm | ISO 15906 |

## Claims

1. A carbon precursor material **characterized by** a flashpoint above 290°C and a softening point between 90 and 300°C Mettler and comprising petroleum-derived pitch product derived from a petroleum-based raw material having a concentration of less than 40% by weight of asphaltenes as measured by SARA analysis.

2. The carbon precursor material of claim 1 having a softening point between 110°C Mettler and 250°C Mettler.

3. The carbon precursor material of claim 1 or 2 having a coke value of at least 50% ALCAN.

4. The carbon precursor material according to any of the above claims, having a coke value of at least 50% ALCAN, a B[a]P content lower than 500 mg/kg and a softening point of above 110°C Mettler, or having a coke value of at least 70% ALCAN, a B[a]P content lower than 100 mg/kg and a softening point above 200°C Mettler.

5. The carbon precursor material according to any of the above claims having a viscosity lower than 600 mPa.s at 180°C while having a softening point between 110°C and 130°C Mettler.

6. The carbon precursor material according to any of the above claims wherein said petroleum-based raw material is further characterized as having a concentration of saturates > 10% by weight and/or resins > 35% by weight as measured by SARA analysis.

7. The carbon precursor material according to any of claims 1 to 6, consisting of said petroleum-derived pitch product.

8. The carbon precursor material according to any of claims 1 to 6, comprising 25 to 90% weight of said petroleum-derived pitch product, and a coal tar-based pitch.

9. Use of the carbon precursor material according to any of the above claims in binding, impregnation, coating processes in the production of graphite electrodes for electric arc furnaces used in steel/ferro-alloy/silicon production or in (semi-)graphitized electrodes for aluminum production.

10. Use of the carbon precursor material according to any of the above claims in coating and binding processes for manufacture of carbon-coated particles and carbon particle composites used as electrode material for the manufacturing of battery electrodes.

11. A graphite or carbon electrode comprising a converted carbon precursor material according to any of claims 1 to 8.

12. A battery electrode comprising a converted carbon precursor material according to any of claims 1 to 8.

13. A process for producing a coating and/or binding and/or impregnation carbon precursor material comprising a petroleum-derived pitch product, the process comprising the steps of:
- providing a petroleum-based raw material having a concentration of less than 40% by weight of asphaltenes by SARA analysis
- thermally treating said petroleum-based raw material above 300°C at atmospheric pressure, and
- subsequently distill the thermally treated material, thereby obtaining a distillation residue being said petroleum-derived pitch product.

14. The process of claim 13, wherein the petroleum-based raw material has a concentration of saturates > 10% by weight and/or resins > 35% by weight as measured by SARA analysis.

15. The process of claim 13, wherein the thermal treatment is performed between 300 and 400°C.

16. The process of claim 13, wherein the distillation of the thermally treated material comprises vacuum distillation.

17. The process of any of the claims 13 or 16, comprising mixing said petroleum-derived pitch product with coal tar-based pitch obtaining an amount of 25 to 90% by weight of said petroleum-derived pitch product in the mix.

18. A process for manufacturing a graphite or carbon electrode comprising the process of any of claims 13 to 17.
